# EUROPÄISCHE PATENTSCHRIFT

(11) **EP 3 127 760 B1**
(45) Veröffentlichungstag und Bekanntmachung des Hinweises auf die Patenterteilung: **08.11.2017**
(21) Anmeldenummer: 15002287.9
(22) Anmeldetag: 01.08.2015
(51) Int. Cl.: B60R 22/347, B60R 22/34

(54) **GURTAUFROLLER FÜR EINEN FAHRZEUG-SICHERHEITSGURT**
BELT ROLLER FOR A VEHICLE SEATBELT
ENROULEUR DE CEINTURE POUR UNE CEINTURE DE SECURITE DE VEHICULE

(43) Veröffentlichungstag der Anmeldung: 08.02.2017
(73) Patentinhaber: TRW Automotive GmbH, 73553 Alfdorf (DE); TRW Polska Sp.z.o.o., 42-200 Czestochowa (PL)
(72) Erfinder: JURA, Jan, Czestochowa 42-200 (PL)
(74) Vertreter: ZF TRW Patentabteilung

(56) Entgegenhaltungen:
- DE-A1-102007 026 128
- DE-U1- 8 803 659
- DE-U1- 9 318 286
- DE-U1- 29 608 209
- JP-A- 2014 177 268

## Beschreibung

Die Erfindung betrifft einen Gurtaufroller für einen Fahrzeug-Sicherheitsgurt, mit einem Rahmen, einer Gurtspule, die drehbar im Rahmen gelagert ist, einem Blockiermechanismus, der zumindest gurtbandsensitiv ansprechen kann und eine Sperrscheibe aufweist, einem Sperrelement, das zwischen einer Ausgangsstellung und einer Sperrstellung verstellbar ist, wobei das Sperrelement in der Sperrstellung mit der Sperrscheibe so zusammenwirkt, dass der Blockiermechanismus bei Gurtbandauszug anspricht, und einem Schaltelement, das mit der Gurtspule gekoppelt ist und das Sperrelement bei einer Drehung der Gurtspule zwischen der Ausgangsstellung und der Sperrstellung verstellen kann.

Das Sperrelement ist Teil eines sogenannten Kindersicherungsmechanismus, mit dem der Gurtaufroller in einen Zustand gebracht werden kann, in welchem der Sicherheitsgurt lediglich aufgewickelt, aber nicht mehr abgezogen werden kann. Dies ermöglicht es, beispielsweise einen Kindersitz zuverlässig im Fahrzeug zu fixieren.

Der Kindersicherungsmechanismus wird üblicherweise dadurch aktiviert, dass das Gurtband vollständig von der Gurtspule abgezogen wird. Wird anschließend der Sicherheitsgurt auf die Gurtspule aufgewickelt, wirkt das Sperrelement mit der Sperrscheibe nach Art einer Ratsche zusammen, sodass die Sperrscheibe relativ zum Sperrelement in der Aufwickelrichtung durchrutschen kann. Wird jedoch die Gurtspule in der Abwickelrichtung gedreht, hält das Sperrelement die Sperrscheibe fest, sodass es zu einer Relativdrehung zwischen der Sperrscheibe und der Gurtspule kommt. Hierdurch spricht der Blockiermechanismus der Gurtspule an, sodass kein Sicherheitsgurt mehr abgezogen werden kann. DE 93 18 286 U1 offenbart einen Gurtaufroller gemäß dem Oberbegriff des Anspruchs 1. Die Aufgabe der Erfindung besteht darin, einen Mechanismus zum Schalten des Sperrelements zu schaffen, der zuverlässig funktioniert und mit geringem Aufwand implementiert werden kann.

Zur Lösung dieser Aufgabe ist bei einem Gurtaufroller der eingangs genannten Art vorgesehen, dass das Sperrelement einen flexiblen Betätigungsarm aufweist, der bei einer Vorbeibewegung des Schaltelements beim Gurtbandauszug flexibel ausweicht, sodass das Sperrelement in der Ausgangsstellung verbleibt, und bei einer Vorbeibewegung des Schaltelements beim Gurtbandeinzug auf das Sperrelement eine Betätigungskraft überträgt, mit der dieses aus der Ausgangsstellung in die Sperrstellung verstellt wird. Kernmerkmal des erfindungsgemäßen Mechanismus ist, dass das Schaltelement sowohl beim Gurtbandauszug als auch beim Gurtbandeinzug auf den Betätigungsarm des Sperrelements triff, aber nur in einer Bewegungsrichtung (beim Gurtbandeinzug) auf den Betätigungsarm eine solche Wirkung ausübt, dass das Sperrelement von einem Zustand in den anderen umgeschaltet wird. Hierdurch ergibt sich ein technisch einfach aufgebauter Mechanismus, der zuverlässig arbeitet.

Gemäß einer Ausgestaltung der Erfindung ist vorgesehen, dass das Schaltelement an einem Planetenrad angebracht ist, das Teil eines Planetengetriebes mit einem Sonnenrad und einem Hohlrad ist. Mit dem Planetengetriebe kann zuverlässig eingestellt werden, nach wie vielen Umdrehungen der Gurtspule das Schaltelement auf den Betätigungsarm des Sperrelements treffen soll.

Vorzugsweise ist dabei vorgesehen, dass das Sonnenrad der Gurtspule und das Hohlrad dem Rahmen zugeordnet ist. Hierdurch ergibt sich ein kompakter Aufbau.

Gemäß einer bevorzugten Ausführungsform ist vorgesehen, dass das Sperrelement einen bistabilen Kippmechanismus aufweist. Der bistabile Kippmechanismus gewährleistet, dass sich das Sperrelement zuverlässig entweder in der Ausgangsstellung oder in der Sperrstellung befindet; undefinierte Zwischenpositionen sind zuverlässig verhindert.

Der bistabile Kippmechanismus weist vorzugsweise ein Federelement auf, das einen Totpunkt definiert. Sobald das Sperrelement aus einer Stellung kommend geringfügig über den Totpunkt bewegt wurde, gewährleistet das Federelement, dass das Sperrelement vollständig in die andere Stellung umschlägt.

Gemäß einer Ausgestaltung der Erfindung ist vorgesehen, dass das Federelement einer Aussparung zugeordnet ist, in der ein rahmenfestes Widerlager angeordnet ist. Das rahmenfeste Widerlager definiert zusammen mit den Wänden der Aussparung gleichzeitig die Endpositionen des Sperrelements in der Ausgangsstellung und der Sperrstellung.

Gemäß einer Ausgestaltung der Erfindung ist vorgesehen, dass das Widerlager an einer Seitenfläche der Aussparung anliegt, wenn der Betätigungsarm bei der Vorbeibewegung des Schaltelements beim Gurtbandauszug flexibel ausweicht. Das Widerlager stellt hierbei einen stabilen Anschlag für das Sperrelement dar, wenn das Schaltelement bei der Vorbeibewegung die Kräfte auf dem Betätigungsarm ausübt, die zum flexiblen Ausweichen notwendig sind.

Gemäß einer alternativen Ausgestaltung ist vorgesehen, dass das Widerlager am Federelement anliegt, wenn der Betätigungsarm bei der Vorbeibewegung des Schaltelements beim Gurtbandauszug flexibel ausweicht. Bei dieser Ausgestaltung muss das Widerstandsmoment, das durch Zusammenwirken des Federelements mit dem Widerlager bereitgestellt wird, größer sein als das Drehmoment, das beim elastischen Ausweichen des Betätigungsarms maximal auftritt.

Der Betätigungsarm kann einstückig mit dem Federelement ausgeführt sein. Hierdurch ergibt sich ein kostengünstiger Aufbau.

Gemäß einer Ausgestaltung der Erfindung ist vorgesehen, dass der Betätigungsarm des Sperrelements sich in einer annähernd radialen Richtung erstreckt. Bei dieser Ausrichtung des Betätigungsarms kann das Schaltelement beim Gurtbandeinzug die notwendige Kraft auf den Betätigungsarm ausüben, damit das Sperrelement aus der Ausgangsstellung in die Sperrstellung umgeschaltet wird.

Gemäß einer Ausführungsform der Erfindung ist ein Sensorruhigstellungsmechanismus vorgesehen ist, der mit dem Planetengetriebe gekoppelt ist. Hierdurch ergibt sich ein kompakter Aufbau, da das Planetengetriebe gleichzeitig zur Ansteuerung des Sensorruhigstellungsmechanismus verwendet werden, mit dem ein unbeabsichtigtes Ansprechen eines Sensors verhindert werden kann, der die Gurtspule blockieren kann.

Vorzugsweist ist der Sensorruhigstellungsmechanismus mit einer Steuerscheibe versehen ist, die mit einer Steuerkontur versehen ist. Mit der Steuerkontur, die auf der Außenseite der Steuerscheibe angeordnet sein kann, kann der Sensorruhigstellungsmechanismus in Abhängigkeit von der Stellung der Gurtspule zuverlässig geschaltet werden.

Dabei kann ein Ruhigstellungshebel vorgesehen ist, dessen Position von der Steuerkontur gesteuert wird. Hierdurch kann eine mechanisch zuverlässige Konstruktion geschaffen werden.

Die Erfindung wird nachfolgend anhand zweier Ausführungsformen beschrieben, die in den beigefügten Zeichnungen dargestellt sind. In diesen zeigen:
- Figur 1 schematisch einen erfindungsgemäßen Gurtaufroller;
- Figur 2 ein Detail des Kindersicherungsmechanismus in einem ersten Zustand während des Gurtbandauszugs;
- Figur 3 ein Detail des Kindersicherungsmechanismus in einem zweiten Zustand während des Gurtbandauszugs;
- Figur 4 ein Detail des Kindersicherungsmechanismus in einem ersten Zustand während des Gurtbandeinzugs;
- Figur 5 ein Detail des Kindersicherungsmechanismus in einem zweiten Zustand während des Gurtbandeinzugs;
- Figur 6 ein Detail des Kindersicherungsmechanismus in einem dritten Zustand während des Gurtbandeinzugs;
- Figur 7 ein Detail des Kindersicherungsmechanismus eines Gurtaufrollers gemäß einer alternativen Ausführungsform während des Gurtbandauszugs;
- Figur 8 einen Querschnitt durch das beim Gurtaufroller von Figur 1 verwendete Planetengetriebe;
- Figur 9 einen Schnitt entlang der Ebene E von Figur 8;
- Figur 10 eine Ansicht entsprechend derjenigen von Figur 9, wobei sich das Planetengetriebe in einem zweiten Zustand befindet.

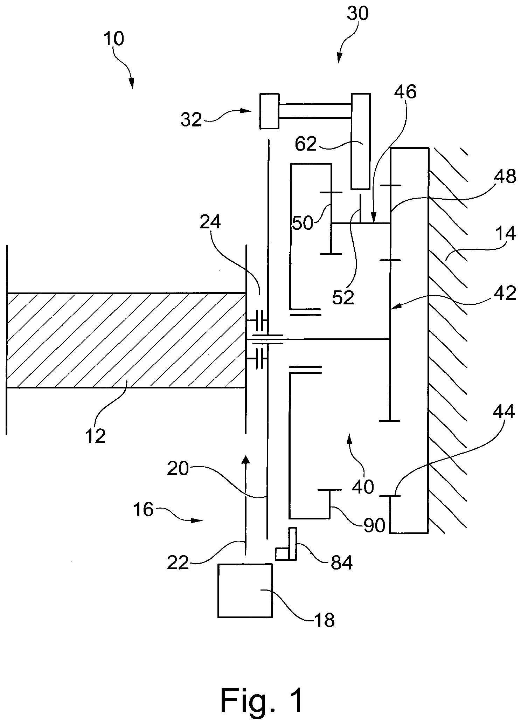

In Figur 1 ist schematisch ein Gurtaufroller 10 gezeigt, der eine Gurtspule 12 aufweist. Auf der Gurtspule ist ein (hier nicht dargestellter) Fahrzeug-Sicherheitsgurt aufgenommen. Die Gurtspule ist drehbar in einem hier schematisch angedeuteten Rahmen 14 gelagert, sodass das Gurtband des Sicherheitsgurts von der Gurtspule 12 abgezogen bzw. wieder auf dieser aufgenommen werden kann.

Um die Gurtspule im Bedarfsfall (beispielsweise bei einer sehr starken Bremsung oder einem Unfall) blockieren zu können, ist ein hier schematisch dargestellter Blockiermechanismus 16 vorgesehen, der u. a. einen Sensor 18, eine Sperrscheibe 20 und ein Blockierelement 22 aufweist.

Das Blockierelement dient dazu, die Gurtspule 12 drehfest relativ zum Rahmen 14 abzustützen, sodass sie (jedenfalls bis zu einem von einem Kraftbegrenzer vorgegebenen Grenzdrehmoment) drehfest gehalten ist.

Die Sperrscheibe 20 dient zur Aktivierung des Blockiermechanismus 16. Sie ist über einen hier schematisch gezeigten Mitnahmemechanismus 24 mit der Gurtspule 12 gekoppelt.

Das Blockierelement 22 kann auf zwei unterschiedliche Arten aktiviert werden, nämlich gurtbandsensitiv und fahrzeugsensitiv. Ein Beispiel für eine gurtbandsensitive Aktivierung ist ein abrupter Gurtbandabzug, wie er beispielsweise bei einer schnellen Vorverlagerung eines Fahrzeuginsassen auftritt. Ein Beispiel für eine fahrzeugsensitive Aktivierung ist eine abrupte Bremsung des Fahrzeugs. Beide Arten der Aktivierung beruhen darauf, dass eine Relativdrehung zwischen der Sperrscheibe 20 und der Gurtspule auftritt oder hervorgerufen wird.

Wenn die Gurtspule 12 sich dreht und geringe Drehbeschleunigungen wirken, dreht sich die Sperrscheibe 20 zusammen mit der Gurtspule 12. Wenn aufgrund der Drehbeschleunigung der Gurtspule 12 (beispielsweise bei abruptem Gurtbandabzug) und der Massenträgheit der Sperrscheibe 20 ein Drehmoment zwischen der Gurtspule 12 und der Sperrscheibe 20 wirkt, das größer ist als das von der Mitnahmemechanismus 24 definierte Mitnahmedrehmoment, kommt es zu einer Relativdrehung zwischen der Sperrscheibe 20 und der Gurtspule 12. Diese Relativdrehung führt dazu, dass das Blockierelement 22 gurtbandsensitiv aktiviert wird.

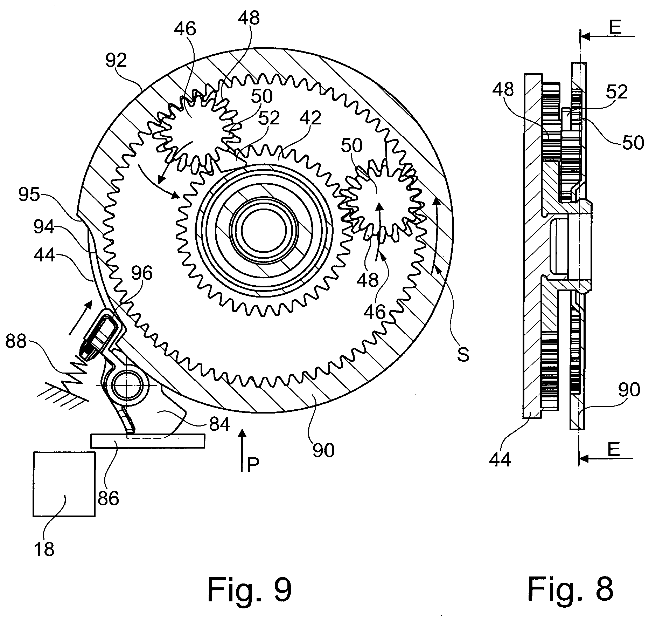

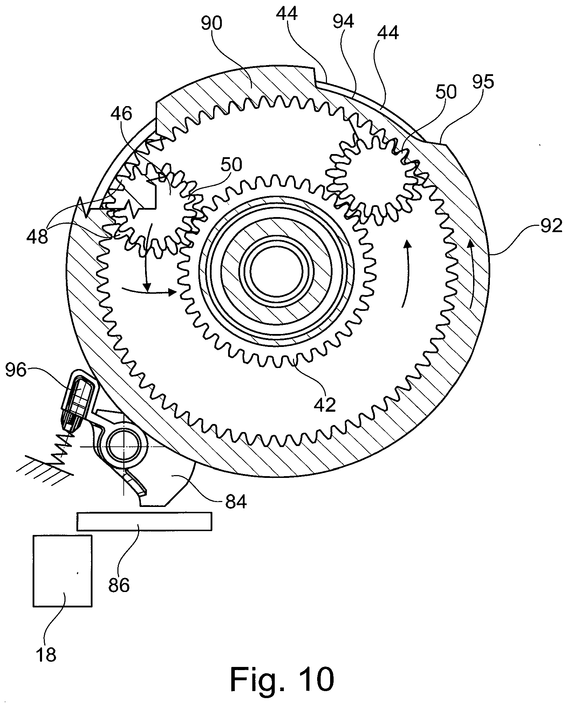

Der Sensor 18 dient zur fahrzeugsensitiven Aktivierung des Blockiermechanismus, also zur Aktivierung, wenn auf das Fahrzeug Beschleunigungen oder Verzögerungen einwirken, die größer als ein vorbestimmter Schwellwert sind. In diesem Fall spricht der Sensor 18 an (beispielsweise gebildet durch ein Trägheitselement und eine von diesem verstellbare Sperrklinke 86, die in den Figuren 9 und 10 zu sehen ist), sodass die Sperrscheibe 20 in Gurtbandabzugsrichtung blockiert wird. Wird dann Gurtband von der Gurtspule 12 abgezogen, wird in gleicher Weise wie bei einer gurtbandsensitiven Aktivierung des Blockiermechanismus 16 das Blockierelement 22 aktiviert.

Der Gurtaufroller 10 ist weiterhin mit einem sogenannten Kindersicherungsmechanismus 30 versehen, mit dem der Gurtaufroller 10 in einen Betriebszustand umgeschaltet werden kann, in dem Gurtband zwar auf die Gurtspule 12 aufgewickelt werden kann, jedoch nicht mehr von dieser abgezogen werden kann. Hierdurch können ein Kindersitz oder auch zu transportierende Lasten an einem Fahrzeugsitz fixiert werden.

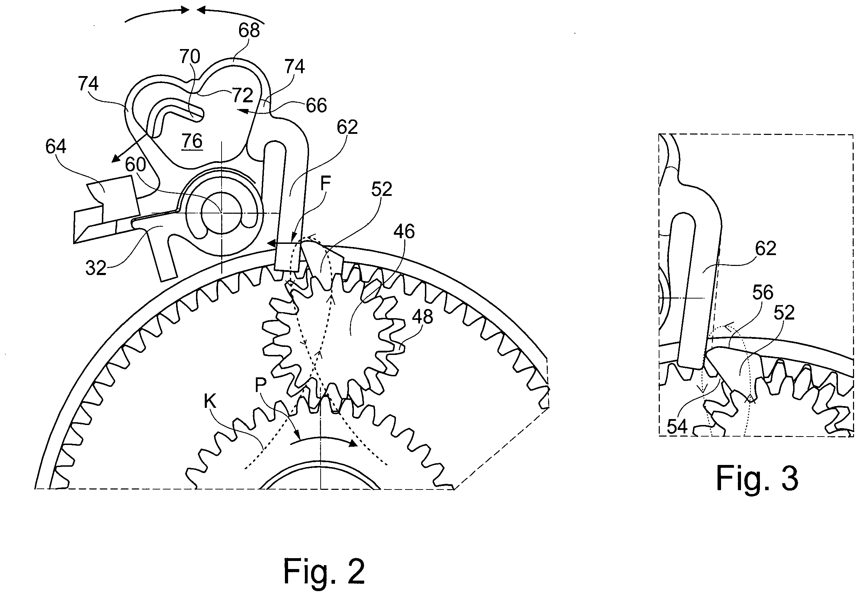

Der Kindersicherungsmechanismus 30 funktioniert allgemein ausgedrückt dadurch, dass ein Sperrelement 32 (siehe auch die Figuren 2 bis 6) vorgesehen ist, das bei aktiviertem Kindersicherungsmechanismus mit der Sperrscheibe 20 nach Art einer Ratsche zusammenwirkt. Wenn die Gurtspule sich in der Gurtbandeinzugsrichtung dreht, also Gurtband aufgewickelt wird, rutscht die Sperrscheibe 20 unter dem Sperrelement 32 durch; die Gurtspule 12 kann das Gurtband ungehindert aufwickeln. Wird dagegen Gurtband abgezogen, blockiert das Sperrelement 32 die Sperrscheibe 20, so dass es zu einer Relativdrehung zwischen der Gurtspule und der Sperrscheibe 20 kommt. Hierdurch spricht der Blockiermechanismus 16 in gleicher Weise wie bei einer gurtband- oder fahrzeugsensitiven Blockierung an. Es kann daher kein weiteres Gurtband abgewickelt werden.

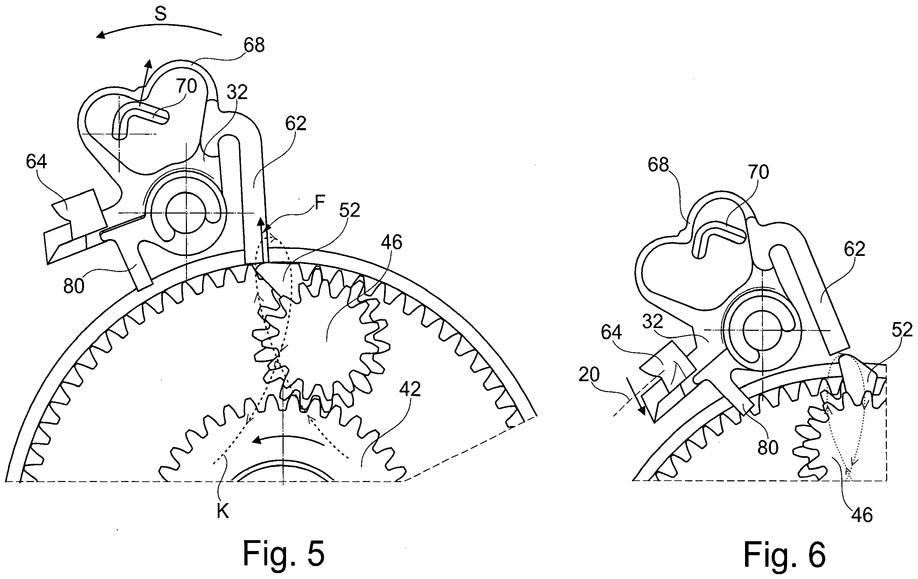

Das Sperrelement 32 wird zwischen einer Ausgangsstellung (siehe die Figuren 2 bis 4) und einer Sperrstellung (siehe Figur 6) mittels eines Getriebes geschaltet, das hier als Planetengetriebe 40 ausgebildet ist.

Es weist ein Sonnenrad 42 auf, das drehfest mit der Gurtspule 12 verbunden ist, ein Hohlrad 44, das hier rahmenfest angeordnet ist, sowie mindestens ein Planetenrad 46, das zwischen den Verzahnungen des Sonnenrades 42 und des Hohlrades 44 umläuft.

Das Planetenrad 46 ist hier als Stufenzahnrad mit einem ersten Zahnrad 48 und einem zweiten Zahnrad 50 ausgebildet. Diese haben unterschiedliche Durchmesser, wobei die Funktion des zweiten Zahnrades 50 später erläutert wird.

Drehfest am Planetenrad 46 ist ein Schaltelement 52 angebracht, das ähnlich wie ein Nocken oder Zahn exzentrisch nach außen vorsteht.

Wie insbesondere in den Figuren 2 und 3 zu sehen ist, ist das Schaltelement 52 in einer Seitenansicht durch zwei schräg zueinander angeordnete Flächen 54, 56 definiert, wobei die Fläche 54 etwa radial bezüglich der Drehachse des Planetenrades 46 ausgerichtet ist und die Fläche 56 mit der Fläche 54 einen Innenwinkel in der Größenordnung von 45 bis 60° einschließt.

Das Sperrelement 32 (siehe insbesondere Figur 2) ist schwenkbar auf einer rahmenfest angeordneten Schwenkachse 60 angeordnet. Es weist einen Betätigungsarm 62 auf, der mit dem Schaltelement 52 zusammenwirken kann. Weiterhin ist ein Sperrzahn 64 vorgesehen, der mit einer Verzahnung am Außenumfang der Sperrscheibe 20 zusammenwirken kann.

Das Sperrelement 32 ist mit einem bistabilen Kippmechanismus 66 versehen, der ein Federelement 68 und ein fahrzeugfest angebrachtes Widerlager 70 aufweist. Das Federelement 68 weist zwei Arme auf, die sich seitlich eines Scheitelpunktes 72 erstrecken. Die vom Scheitelpunkt 72 abgewandten Enden des Federelements 68 sind einstückig mit Körperabschnitten 74 des Sperrelements 32 ausgeführt, die zusammen mit dem Federelement 68 eine im weitesten Sinne herzförmige Aussparung 76 umschließen. Innerhalb dieser Aussparung 76 ist auch das Widerlager 70 angeordnet.

Der Betätigungsarm 62 ist einstückig mit einem der Körperabschnitte 74 ausgeführt.

Der Betätigungsarm 62 erstreckt sich in den Bewegungsraum des Schaltelements 52 hinein, sodass das Schaltelement 52, wenn das Planetenrad 46 im Hohlrad 44 umläuft, auf den Betätigungsarm 62 treffen kann.

Wenn das Gurtband von der Gurtspule 12 vollständig abgezogen wird, führt die Gurtspule 12 mehrere Umdrehungen aus. Dabei läuft das Planetenrad 46 mehrere Male im Hohlrad 44 um und kommt entsprechend auch mehrere Male am Sperrelement 32 vorbei. Durch geeignete Positionierung des Planetenrades 46 innerhalb des Hohlrades 44 und durch geeignete Auswahl der Anzahl der Zähne des Sonnenrades 42, des Zahnrades 48 und des Hohlrades 44 ist gewährleistet, dass das Schaltelement 52 nur bei der "letzten" Vorbeibewegung mit dem Betätigungsarm 62 zusammenwirkt, also wenn bereits fast das gesamte Gurtband von der Gurtspule 12 abgezogen ist. Bei allen anderen Vorbeibewegungen befindet sich das Planetenrad 46 in einer solchen Position, dass das Schaltelement 52 unter dem Betätigungsarm 62 hindurchtaucht.

In den Figuren 2 und 3 ist das Zusammenwirken des Schaltelements 52 mit dem Betätigungsarm 62 bei der letzten Vorbeibewegung zu sehen. Das Sonnenrad 42 dreht sich beim Abwickeln des Gurtbandes in der Richtung des Pfeils P, und die Spitze des Schaltelements 52 bewegt sich auf der Kurve K. Das Schaltelement 52 trifft dabei in (bezogen auf das Hohlrad) annähernd tangentialer Richtung auf den Betätigungsarm 62 und übt auf diesen eine Kraft F aus. Dadurch wird der Betätigungsarm 62 elastisch verformt (siehe den in Figur 3 gezeigten Zustand im Vergleich zum strichpunktierten Ausgangszustand), während das Sperrelement 32 sich mit der Innenseite der Aussparung 76 am Widerlager 70 abstützt. Das Sperrelement 32 verbleibt also in der in Figur 2 gezeigten Ausgangsstellung, bis das Schaltelement 52 den Kontakt mit dem Betätigungsarm 62 verliert.

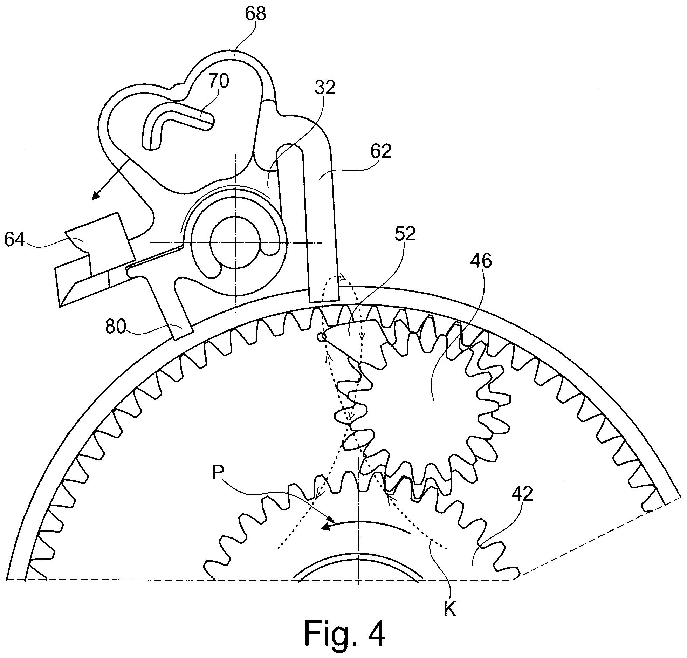

In den Figuren 4 bis 6 ist das Zusammenwirken des Schaltelements 52 mit dem Betätigungsarm 62 gezeigt, wenn sich die Gurtspule in entgegengesetzter Richtung dreht, also in der Aufwickelrichtung. Das Schaltelement 52 nähert sich dann entlang der Kurve K von der radial innen liegenden Seite an den Betätigungsarm 62 an (siehe Figur 4) und trifft auf dessen nach innen gerichtete Stirnseite (siehe Figur 5). Hierdurch wird das Sperrelement 32 in der Richtung des Pfeils S ausgehend von der Ausgangsstellung zunächst in einen Zustand verstellt, in dem der Scheitelpunkt 72 des Federelements 68 am Widerlager 70 anliegt (siehe Figur 5) und schließlich in die Sperrstellung verstellt (siehe Figur 6), in der der Scheitelpunkt 72 über das Widerlager 70 hinweggerutscht ist und der Sperrzahn 64 so weit radial einwärts verschwenkt ist, dass er mit dem Außenumfang des hier schematisch angedeuteten Sperrrades 20 zusammenwirkt.

In der Sperrstellung des Sperrelements 32 ist der Kindersicherungsmechanismus aktiviert, und es kann Gurtband lediglich abgezogen werden.

Wenn das Gurtband wieder (nahezu) vollständig auf der Gurtspule aufgenommen ist, trifft das Schaltelement 52 auf einen Lösevorsprung 80 am Sperrelement 32, wodurch dieses wieder zurück in die Ausgangsstellung verstellt wird.

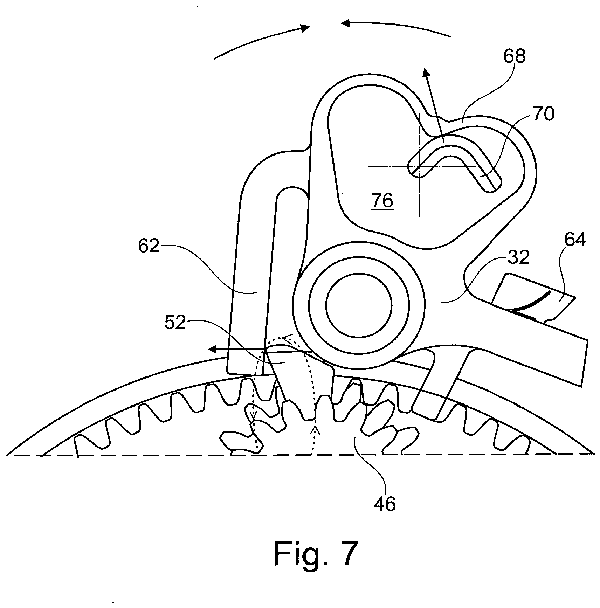

In Figur 7 ist eine alternative Ausführungsform gezeigt, bei der die Anordnung des Sperrelements 32 spiegelverkehrt gegenüber der in den Figuren 2 bis 6 gezeigten Ausführungsform ist. Dies führt dazu, dass die Reaktionskraft, die beim Abwickeln des Gurtbandes vom Schaltelement 52 auf den Betätigungsarm 62 ausgeübt wird, durch Anlage des Federelements 68 am Widerlager 70 (und nicht durch Anlage des Widerlagers 70 am Rand der Aussparung 76) aufgebracht werden muss. Abgesehen hiervon ist die Funktionsweise dieselbe wie bei der ersten Ausführungsform.

In den Gurtaufroller 10 ist weiterhin eine sogenannte Sensorruhigstellung implementiert, die gewährleistet, dass bei nahezu vollständig aufgewickeltem Gurtband der Sensor 18 nicht ansprechen kann. Hierdurch kann verhindert werden, dass der Blockiermechanismus des Gurtaufrollers unbeabsichtigt in Betriebszuständen anspricht, bei denen kein Fahrzeuginsasse angeschnallt ist.

Die Sensorruhigstellung funktioniert verallgemeinert ausgedrückt so, dass bei fast vollständig aufgewickeltem Gurtband ein Ruhigstellungshebel 84 so verstellt wird, dass die Sperrklinke 86 des Sensors 18 in einer Position gehalten wird, in der sie nicht an der Sperrscheibe 20 angreifen kann.

Der Ruhigstellungshebel 84 ist in den Figuren 9 und 10 zu sehen. Er kann verstellt werden zwischen einer aktivierten Stellung (siehe Figur 9), in der er mit einer hier schematisch gezeigten Sperrklinke 86 so zusammenwirkt, dass diese nicht in der Richtung des Pfeils P von Figur 9 nach oben verstellt werden kann, und einer Betriebsstellung (siehe Figur 10), in welcher die Sperrklinke 86 freigegeben ist.

Auf den Ruhigstellungshebel 84 wirkt eine Feder 88 ein, die den Ruhigstellungshebel in die aktivierte Stellung beaufschlagt. Aus dieser kann der Ruhigstellungshebel 84 mittels einer Steuerscheibe 90 verstellt werden.

Die Steuerscheibe 90 ist mit einer Innenverzahnung versehen, in die das zweite Zahnrad 50 des Planetenrades 46 eingreift. Aufgrund der geringfügig unterschiedlichen Zähnezahlen der Zahnräder 48, 50 ist die Drehung der Steuerscheibe 90 relativ zur Drehung des Sonnenrades 42 stark untersetzt, sodass die Steuerscheibe 90 etwas weniger als eine Umdrehung ausführt, wenn das gesamte Gurtband von der Gurtspule 12 abgewickelt wird (oder umgekehrt auch wieder aufgewickelt wird).

Die Steuerscheibe 90 ist mit einer Steuerkurve versehen, die aus zwei Abschnitten besteht. Ein erster Abschnitt 92 ist gebildet durch den Außenumfang der Steuerscheibe 90; dieser erstreckt sich über fast den gesamten Außenumfang, beispielsweise über einen Winkelbereich von etwa 330°. Ein zweiter Abschnitt 94 hat einen geringeren Durchmesser als der erste Abschnitt 92; der Abschnitt 94 kann also als Vertiefung angesehen werden.

Der Ruhigstellungshebel 84 hat einen Gleitkopf 96, der mit der Außenkontur der Steuerscheibe 90 zusammenwirkt. Die Feder 88 gewährleistet dabei, dass der Gleitkopf 96 immer an der Außenkontur der Steuerscheibe 90 anliegt.

In der Ausgangsstellung (also bei vollständig aufgewickeltem Gurtband) befindet sich der Gleitkopf 96 im zweiten Abschnitt 94, sodass sich der Ruhigstellungshebel 84 in der aktivierten Position befindet (siehe Figur 9). Wenn das Gurtband von der Gurtspule 12 abgezogen wird, dreht sich die Steuerscheibe 90 in der Richtung des Pfeils S von Figur 9, sodass nach einer vorbestimmten Anzahl von Umdrehungen der Gurtspule 12 der Gleitkopf 96 über eine Übergangskontur 95 auf den ersten Abschnitt 92 geführt wird. Dadurch wird der Ruhigstellungshebel 84 in die Betriebsposition (siehe Figur 10) verschwenkt, sodass der Sensor 18 uneingeschränkt ansprechen kann.

## Patentansprüche

1. Gurtaufroller (10) für einen Fahrzeug-Sicherheitsgurt, mit einem Rahmen (14), einer Gurtspule (12), die drehbar im Rahmen (14) gelagert ist, einem Blockiermechanismus (16), der zumindest gurtbandsensitiv ansprechen kann und eine Sperrscheibe (20) aufweist, einem Sperrelement (32), das zwischen einer Ausgangsstellung und einer Sperrstellung verstellbar ist, wobei das Sperrelement (32) in der Sperrstellung mit der Sperrscheibe (20) so zusammenwirkt, dass der Blockiermechanismus (16) bei Gurtbandauszug anspricht, und einem Schaltelement (52), das mit der Gurtspule (12) gekoppelt ist und das Sperrelement (32) bei einer Drehung der Gurtspule (12) zwischen der Ausgangsstellung und der Sperrstellung verstellen kann, **dadurch gekennzeichnet, dass** das Sperrelement (32) einen flexiblen Betätigungsarm (62) aufweist, der bei einer Vorbeibewegung des Schaltelements (52) beim Gurtbandauszug flexibel ausweicht, so dass das Sperrelement (32) in der Ausgangsstellung verbleibt, und bei einer Vorbeibewegung des Schaltelements (52) beim Gurtbandeinzug auf das Sperrelement (32) eine Betätigungskraft überträgt, mit der dieses aus der Ausgangsstellung in die Sperrstellung verstellt wird.

2. Gurtaufroller nach Anspruch 1, **dadurch gekennzeichnet, dass** das Schaltelement (52) an einem Planetenrad (46) angebracht ist, das Teil eines Planetengetriebes mit einem Sonnenrad (42) und einem Hohlrad (44) ist.

3. Gurtaufroller nach Anspruch 2, **dadurch gekennzeichnet. dass** das Sonnenrad (42) der Gurtspule (12) und das Hohlrad (44) dem Rahmen (14) zugeordnet ist.

4. Gurtaufroller nach einem der vorhergehenden Ansprüche, **dadurch gekennzeichnet, dass** das Sperrelement (32) einen bistabilen Kippmechanismus (68, 70) aufweist.

5. Gurtaufroller nach Anspruch 4, **dadurch gekennzeichnet, dass** der bistabile Kippmechanismus ein Federelement (68) aufweist, das einen Tot- oder Scheitelpunkt (72) definiert.

6. Gurtaufroller nach Anspruch 5, **dadurch gekennzeichnet, dass** das Federelement (68) einer Aussparung (76) zugeordnet ist, in der ein rahmenfestes Widerlager (70) angeordnet ist.

7. Gurtaufroller nach Anspruch 6, **dadurch gekennzeichnet, dass** das Widerlager (70) an einer Seitenfläche der Aussparung (76) anliegt, wenn der Betätigungsarm (62) bei der Vorbeibewegung des Schaltelements (52) beim Gurtbandauszug flexibel ausweicht.

8. Gurtaufroller nach Anspruch 6, **dadurch gekennzeichnet, dass** das Widerlager (70) am Federelement (68) anliegt, wenn der Betätigungsarm (62) bei der Vorbeibewegung des Schaltelements (52) beim Gurtbandauszug flexibel ausweicht.

9. Gurtaufroller nach einem der Ansprüche 5 bis 8, **dadurch gekennzeichnet, dass** der Betätigungsarm (62) einstückig mit dem Federelement (68) ausgeführt ist.

10. Gurtaufroller nach einem der vorhergehenden Ansprüche, **dadurch gekennzeichnet, dass** der Betätigungsarm (62) des Sperrelements (32) sich in einer annähernd radialen Richtung erstreckt.

11. Gurtaufroller nach einem der vorhergehenden Ansprüche, **dadurch gekennzeichnet, dass** ein Sensorruhigstellungsmechanismus vorgesehen ist, der mit dem Planetengetriebe (40) gekoppelt ist.

12. Gurtaufroller nach Anspruch 11, **dadurch gekennzeichnet, dass** der Sensorruhigstellungsmechanismus mit einer Steuerscheibe (90) versehen ist, die mit einer Steuerkontur versehen ist.

13. Gurtaufroller nach Anspruch 12, **dadurch gekennzeichnet, dass** ein Ruhigstellungshebel (84) vorgesehen ist, dessen Position von der Steuerkontur (92, 94, 95) gesteuert wird.

## Claims

1. A belt retractor (10) for a vehicle seat belt comprising a frame (14), a belt reel (12) being rotatably supported in the frame (14), a blocking mechanism (16) which is adapted to be responsive at least sensitively to the webbing and includes a locking disk (20), a locking element (32) being adjustable between a home position and a locking position, wherein the locking element (32) interacts with the locking disk (20) in the locking position so that the blocking mechanism (16) is responsive in the case of webbing extension, and a switching element (52) being coupled to the belt reel (12) and being adapted to adjust the locking element (32) upon rotation of the belt reel (12) between the home position and the locking position, **characterized in that** the locking element (32) has a flexible actuating arm (62) which flexibly deflects with the switching element (52) passing by during webbing extension so that the locking element (32) remains in the home position and, with the switching element (52) passing by during webbing retraction, transmits an actuating force to the locking element (32) by which actuating force the latter is adjusted from the home position to the locking position.

2. The belt retractor according to claim 1, **characterized in that** the switching element (52) is mounted on a planet gear (46) which is part of a planetary gear set comprising a sun wheel (42) and a hollow wheel (44).

3. The belt retractor according to claim 2, **characterized in that** the sun wheel (42) is associated with the belt reel (12) and the hollow wheel (44) is associated with the frame (14).

4. The belt retractor according to any one of the preceding claims, **characterized in that** the locking element (32) includes a bistable tilt mechanism (68, 70).

5. The belt retractor according to claim 4, **characterized in that** the bistable tilt mechanism includes a spring element (68) defining a dead center or crest (72).

6. The belt retractor according to claim 5, **characterized in that** the spring element (68) is associated with a recess (76) in which a counter-bearing (70) fixed to the frame is arranged.

7. The belt retractor according to claim 6, **characterized in that** the counter-bearing (70) is adjacent to a lateral surface of the recess (76), when the actuating arm (62) flexibly deflects with the switching element (52) passing by during webbing extension.

8. The belt retractor according to claim 6, **characterized in that** the counter-bearing (70) is adjacent to the spring element (68), when the actuating arm (62) flexibly deflects with the switching element (52) passing by during webbing extension.

9. The belt retractor according to any one of the claims 5 to 8, **characterized in that** the actuating arm (62) is formed integrally with the spring element (68).

10. The belt retractor according to any one of the preceding claims, **characterized in that** the actuating arm (62) of the locking element (32) extends in an approximately radial direction.

11. The belt retractor according to any one of the preceding claims, **characterized in that** a sensor tranquilizing mechanism is provided which is coupled to the planetary gear set (40).

12. The belt retractor according to claim 11, **characterized in that** the sensor tranquilizing mechanism is provided with a control disk (90) which is provided with a control contour.

13. The belt retractor according to claim 12, **characterized in that** a tranquilizing lever (84) is provided the position of which is controlled by the control contour (92, 94, 95).

## Revendications

1. Enrouleur de ceinture (10) pour une ceinture de sécurité de véhicule, comprenant un cadre (14), une bobine de ceinture (12) qui est montée libre en rotation dans le châssis (14), un mécanisme de blocage (16) qui est au moins sensible à la sangle de la ceinture et qui possède un disque de verrouillage (20), un élément de verrouillage (32) qu'il est possible de positionner dans une position de déverrouillage ou de verrouillage, pour lequel l'élément de verrouillage (32) interagit avec le disque de verrouillage (20), que le mécanisme de blocage (16) répond au déroulement de la sangle de ceinture et qu'un interrupteur (52) couplé avec la bobine de ceinture (12) peut faire passer l'élément de verrouillage ( 32) d'une position déverrouillée à une position verrouillée lors la rotation de la bobine de ceinture (12), **caractérisé en ce que** l'élément de verrouillage (32) est équipé d'un bras d'actionnement (62) flexible, qui se détend par le déclenchement de l'interrupteur (52) lors du déroulement de la sangle de ceinture, de sorte que l'élément de verrouillage (32) reste en position déverrouillée, et qui lors du déclenchement de l'interrupteur (52) lors de la rétraction de la sangle de ceinture exerce une force sur l'élément de verrouillage (32), grâce à laquelle il passe d'une position déverrouillée à une position verrouillée.

2. Enrouleur de ceinture de sécurité selon la revendication 1, **caractérisé en ce que** l'élément de verrouillage (52) est installé sur une roue satellite (46), qui fait parti d'un système d'engrenage planétaire avec une roue centrale (42) et une couronne dentée (44).

3. Enrouleur de ceinture de sécurité selon la revendication 2, **caractérisé en ce que** la roue centrale (42) de la bobine de ceinture (12) et la couronne dentée sont associés au châssis (14).

4. Enrouleur de ceinture de sécurité selon l'une quelconque des revendications précédentes, **caractérisé en ce que** l'élément de verrouillage (32) comprend un système d'inclinaison bistable (68-70).

5. Enrouleur de ceinture de sécurité selon la revendication 4, **caractérisé en ce que** le système d'inclinaison bistable comprend un ressort (68), qui définit un point mort ou point haut (72).

6. Enrouleur de ceinture de sécurité selon la revendication 5, **caractérisé en ce que** le ressort (68) est associé à un évidement (76), dans lequel est disposé une butée (70) fixée au châssis.

7. Enrouleur de ceinture de sécurité selon la revendication 6, **caractérisé en ce que** la butée (70) est située sur une face latérale de l'évidement (76), quand le bras d'actionnement (62) se détend lors de l'activation de l'interrupteur (52) et du déroulement de la sangle de la ceinture.

8. Enrouleur de ceinture de sécurité selon la revendication 6, **caractérisé en ce que** la butée (70) est fixé au ressort (68), quand le bras d'actionnement (62) se détend lors de l'activation de l'interrupteur (52) et du déroulement de la sangle de la ceinture.

9. Enrouleur de ceinture de sécurité selon l'une des revendications 5 jusqu'à 8, **caractérisé en ce que** le bras d'actionnement (62) est fait d'une seule pièce avec le ressort (68).

10. Enrouleur de ceinture de sécurité selon l'une quelconque des revendications précédentes, **caractérisé en ce que** le bras d'actionnement (62) de l'élément de verrouillage (32) s'étire dans une direction approximativement radiale.

11. Enrouleur de ceinture de sécurité selon l'une quelconque des revendications précédentes, **caractérisé en ce qu'**un mécanisme détecteur de blocage est prévu, couplé avec l'engrenage planétaire (40).

12. Enrouleur de ceinture de sécurité selon la revendication 11, **caractérisé en ce que** le mécanisme détecteur de blocage est muni d'un disque de commande (90), qui est lui-même pourvu d'un profil de commande.

13. Enrouleur de ceinture de sécurité selon la revendication 11, **caractérisé en ce qu'**un levier de blocage (84) est prévu, dont la position est guidée par le profil de commande (92, 94, 95).
